# EUROPEAN PATENT SPECIFICATION

(11) **EP 4 415 590 B1**
(45) Date of publication and mention of the grant of the patent: **22.01.2025**
(21) Application number: 22818104.6
(22) Date of filing: 13.10.2022
(51) Int. Cl.: A47J 31/44

(54) **MILK MODULE FOR PREPARING MILK-BASED BEVERAGES**
MILCHMODUL ZUR ZUBEREITUNG VON GETRÄNKEN AUF MILCHBASIS
MODULE DE LAIT POUR LA PRÉPARATION DE BOISSONS À BASE DE LAIT

(30) Priority: 15.10.2021 EP 21203004; 11.10.2022 IT 202200020949
(43) Date of publication of application: 21.08.2024
(73) Proprietor: VEA GROUP S.P.A., 24121 Bergamo (IT)
(72) Inventor: CERIANI, Alessandro, 24040 Chignolo d'Isola (BG) (IT); IEMMA, Lorenzo, 24040 Chignolo d'Isola (BG) (IT); FERRANTE, Antonello, 24040 Chignolo d'Isola (BG) (IT)
(74) Representative: Studio Torta S.p.A.
(86) International application number: PCT/IB2022/059827
(87) International publication number: WO 2023/062582

(56) References cited:
- EP-A1- 3 763 668
- WO-A1-2017/155403
- WO-A1-2019/077576
- US-A1- 2018 084 940

## Description

### TECHNICAL FIELD OF THE INVENTION

The present invention relates to a milk module for preparing hot or cold, frothed or non-frothed milk beverages from liquid milk of animal or plant origin.

This type of milk modules is used as stand-alone units or, more commonly, are used alongside, or integrated in, machines for preparing coffee-based beverages to form therewith a multi-product preparation unit.

### STATE OF THE ART

A milk module of the type specified above normally comprises a milk line, which extends from a liquid milk container to a beverage dispensing nozzle and comprises: a milk pump to suck the milk from the container, an air inlet to allow air to be introduced in the milk line on the suction side of the pump, an frothing device arranged downstream of the milk pump, and a heating device arranged normally between the frothing device and the beverage dispensing nozzle.

In use, a given amount of air is introduced into the milk flow sucked from the container, and the resulting milk-air mixture is supplied under pressure to the frothing device to be frothed and then, if necessary, heated by the heating device.

Commonly, the frothing device comprises a flow restriction, for example formed by a fixed nozzle or by a fixed or adjustable throttle valve. The heating device normally comprises a through-flow heater, which may be an electric heater or a heat exchanger. In other cases, the milk or milk-air mixture is heated by injecting a steam flow into the milk line.

As is known to those skilled in the art, the amount of air introduced into the milk line represents an indispensable parameter for preparing frothed beverages having in the cups high requirements from both an organoleptic and an aesthetic point of view. For this reason, recent decades have seen an evolution of the traditional systems based on an ON/OFF air control, wherein the air inlet is opened or closed by means of a solenoid valve with a fixed flow rate, depending on whether a frothed beverage is to be obtained or not, toward more sophisticated systems capable of proportionally controlling introduction of air in the milk line so that variable amounts of air can be supplied according to the beverage to be prepared.

One of the most commonly used systems for proportionally controlling the amount of air consists in sucking air from the external environment by means of the action of the milk pump and, before introducing the sucked air into the milk line, electronically adjusting the air flow rate by means of a proportional solenoid valve. Normally, the solenoid valve is controlled by an electronic control unit of the milk module according to closed-loop or open-loop control algorithms widely known in the field, based on various operating parameters, such as the type of milk, the temperature of the cold milk or of the milk-air mixture, the milk pump speed, etc.

Some systems using a proportional solenoid valve for adjusting the air flow rate are exemplarily disclosed in the following pieces of prior art:
EP 3 181 021 A1 (Steiner Weggis), in which the amount of air is adjusted by means of a proportional solenoid valve to obtain a given consistency of the milk foam. The proportional air solenoid valve is controlled by an electronic control unit based on the measurement of some operating parameters, such as the type of milk, the temperature of the milk in the milk container, and the temperature of the hot milk-air mixture;
EP 3 039 999 B1 and EP 3 040 000 A1 (Cimbali), in which the amount of air is adjusted by a proportional solenoid valve controlled by an electronic control unit according to a predetermined program stored in the electronic control unit;
EP 3 426 110 B1 (Douwe Egberts), in which the amount of air is adjusted by a proportional solenoid valve controlled by an electronic control unit based on the temperature measured by a sensor arranged adjacent to or at the milk inlet;
WO 2017/155403 A1 (Douwe Egberts), in which the amount of air is adjusted by a solenoid valve controlled by an electronic control unit according to the type of beverage to be produced; WO 2017/155403 A1 dislcoses a milk module for preparing hot or cold, frothed or non-frothed milk-based beverages from liquid milk; the milk module comprises a milk line extending from a milk container up to a milk dispensing outlet; and an air line extending from an air source and opens into the milk line; the milk line comprises a milk pump to suck the milk from the milk container, a flow restriction arranged on a delivery side of the milk pump, and a milk heater; the milk module further comprises a proportional air solenoid valve arranged along the air line; and an electronic control unit.
EP 3 277 140 A1 (Breville), in which pressurized air delivered by an air pump is injected in an air injection flow path which opens in a steam flow path.

### OBJECT AND SUMMARY OF THE INVENTION

The aim of the present invention is to provide a milk module for preparing beverages, in particular frothed or non-frothed milk, which allows the amount of air fed to the milk line to be accurately adjusted so as to improve the organoleptic and aesthetic qualities of the beverage with respect to the prior art systems.

According to the present invention, a milk module for preparing beverages, in particular frothed or non-frothed milk is provided, as claimed in the appended claims.

### BRIEF DESCRIPTION OF THE DRAWINGS

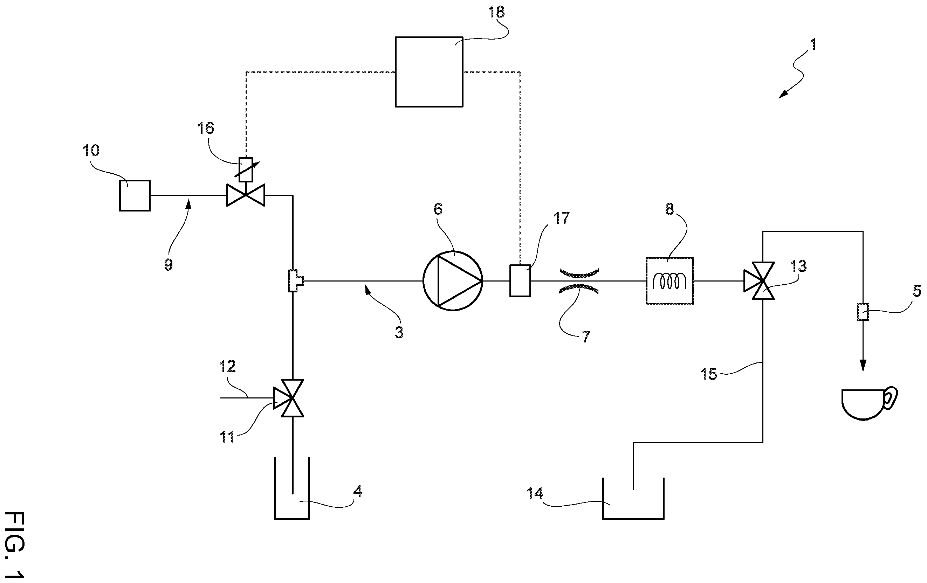

The attached Figure shows a hydraulic diagram of a preferred embodiment of a milk module of the present invention.

### DETAILED DESCRIPTION OF PREFERRED EMBODIMENTS OF THE INVENTION

The present invention will now be described in detail with reference to the attached figures to allow a person skilled in the art to comprehend, make and use it. Various modifications to the described embodiments will be immediately apparent to the persons skilled in the art and the generic principles described can be applied to other embodiments and applications without departing from the protective scope of the present invention, as defined in the attached claims.

In the attached Figure, reference numeral **1** references, as a whole, a milk module **1** for producing hot or cold, frothed or non-frothed milk-based beverages, starting from liquid milk of animal or plant origin.

Depending on its application, the milk module **1** can be configured to operate as stand-alone milk module or can be connected to one or more automatic beverage preparation machines, for example coffee machines, to form an integrated multi-product production unit.

The milk module **1** comprises a milk line **3** extending from a milk container **4,** preferably housed in a cooler (not shown) designed to keep the milk at a temperature between 3°G and 5°C, up to a milk dispensing nozzle **5** arranged in a cup filling compartment (not shown).

The milk line **3** comprises, in succession, a milk pump **6** to suck milk from the milk container **4,** a flow restriction **7** arranged on a delivery side of the milk pump **6,** and a milk through-flow heater **8.**

In a different embodiment not shown, the flow restriction **7** could be arranged downstream of the milk heater **8.**

Conveniently, the milk pump **6** is a rotary displacement pump, preferably a gear pump.

The flow restriction **7** may be formed by a fixed nozzle or by a fixed or adjustable baffle or throttle valve.

Conveniently, the milk heater **8** is an electric heater, preferably an electromagnetic induction heater.

In a different embodiment not shown, the milk heater **8** could be a heat exchanger or a steam heater to inject a steam jet directly into the milk flow or indirectly by heating a milk duct.

The milk module **1** further comprises an air line **9** extending from an air source, typically an external environment, through an air filter **10** and opening into the milk line **3** in a point thereof on the suction side of the milk pump **6,** so that, in use, operation of the milk pump **6** causes, in addition to the suction of the milk from the milk container **4,** also the suction of an air flow into the milk line **3.**

In a different embodiment, the air line **9** could open into a point of the milk line **3** on the delivery side of the milk pump **6,** upstream of the flow restriction **7,** and supplied by an air compressor.

The flow restriction **7** defines a localized narrowing of the cross-section of the milk line **3** downstream of the milk pump **6** such that, in use, the milk-air mixture flowing therethrough undergoes a rapid compression and a subsequent rapid expansion that transforms, according to a principle well known to those skilled in the art, the milk-air mixture into frothed milk.

The milk module **1** further comprises a three-way solenoid valve **11** at an inlet of the milk line **3** to selectively put the milk line **3** in fluidic communication with the milk container **4,** in a normal beverage preparation configuration, and with a water line **12** in a washing configuration.

The milk module **1** further comprises a further three-way diverter solenoid valve **13** downstream of the through-flow heater **8** to selectively put the milk line **3** in fluidic communication with the milk dispensing nozzle **5** in the beverage preparation configuration and with a wastewater container **14** via a discharge duct **15** in the washing configuration.

In order to adjust the amount of air that is introduced into the milk line **3,** the milk module **1** further comprises:
- a proportional air solenoid valve **16** arranged along the air line **9,** downstream of the air filter **10;**
- a pressure sensor **17** arranged along the milk line **3,** on the delivery side of the milk pump **6,** between the delivery side and the flow restriction **7,** to measure and output an electrical output indicative of the measured pressure of the milk-air mixture downstream of the milk pump **6;** and
- an electronic control unit **18** in communication with, in particular electrically connected to, the pressure sensor **17** to receive the electrical output thereof and the proportional air solenoid valve **16** to supply electrical commands thereto, and programmed to control operation of the proportional air solenoid valve **16** based on the pressure of the milk-air mixture measured by the pressure sensor **17,** to cause the milk module **1** to produce milk-based beverages having high quality both organoleptically and aesthetically, namely, that contain the correct amount of milk and that a top layer of milk foam has an appropriate height and consistency.

In a different embodiment not shown, the pressure sensor **17** could be arranged downstream of the flow restriction **7** or downstream of the milk heater **8.**

In a further embodiment not shown, the pressure sensor **17,** instead of being a physical sensor arranged along the milk line **3,** could be a virtual sensor implemented by the electronic control unit **18** to estimate the pressure of the milk-air mixture downstream of the milk pump **6** based on an electric current absorption of the milk pump **6,** which should therefore be measured for this purpose via known available technologies.

To control operation of the proportional air solenoid valve **16,** in one embodiment the electronic control unit **18** is programmed to:
- store data representative of at least one target pressure profile **P** indicative of a time development of a target pressure of the milk-air mixture that is desired to be obtained in the milk line **3,** downstream of the milk pump **6;** and
- closed-loop control the proportional air solenoid valve **16** based on a deviation between the measured pressure of the milk-air mixture downstream of the milk pump **6** measured by the pressure sensor **17** and the target pressure of the milk-air mixture that is desired to be obtained and represented by the target pressure profile **P.**

In one embodiment, the target pressure profile **P** is constant over time to cause the proportional air solenoid valve **16** to be controlled so as to maintain a constant pressure of the milk-air mixture in the milk line **3,** downstream of the milk pump **6.**

In a different embodiment, the pressure profile **P** has a time-varying development to cause the proportional air solenoid valve **16** to be controlled so that the pressure of the milk-air mixture in the milk line **3,** downstream of the milk pump **6,** has a time development similar to that of the target pressure profile **P.**

Exemplarily, a target pressure profile **P** with a time-varying development could have a trend according to a broken line, formed by a plurality of substantially straight segments comprising a first segment with a first duration, in which the target pressure increases from an initial value, for example 1 bar, to a final value, for example 4 bar, in a given time interval; a second segment with a second duration, in which the target pressure remains substantially constant for a given time interval; and a third segment with a third duration, in which the target pressure returns to the initial value in a given time interval.

In a different embodiment, the electronic control unit **18** is programmed to store data representative of different target pressure profiles **P,** each of which can be conveniently associated with a respective milk-based beverage that can be produced by the milk module **1** and that can be selected by a user through a graphical user interface (GUI) displayed on a display of an automatic beverage preparation machine with which the milk module **1** is associated or in which it is integrated.

In one embodiment, the electronic control unit **18** is programmed to output electrical commands for the proportional air solenoid valve **16** by implementing, for example, a Proportional-Derivative (PD) controller.

It is understood that controllers other than the one indicated, and which those skilled in the art may deem to be suitable for the purpose, can be implemented.

In order to control operation of the proportional air solenoid valve **16,** the electronic control unit **18** is programmed:
- to compare the electrical output of the pressure sensor **17** with the target pressure profile **P;**
- as long as the measured pressure of the milk-air mixture downstream of the milk pump **6** does not deviate from the target pressure by an amount greater than a certain tolerance threshold, for example ± 0.2 bar, to make no adjustment to the proportional air solenoid valve **16;**
- when, instead, the measured pressure of the milk-air mixture downstream of the milk pump **6** deviates from the target pressure by an amount greater than the aforesaid tolerance threshold, to intervene on the proportional air solenoid valve **16** by increasing or reducing the air flow section by an amount (in percent) proportional to the deviation of the measured pressure from the target pressure, depending on whether the measured pressure of the milk-air mixture downstream of the milk pump **6** is lower or, respectively, higher than the target pressure by an amount greater than the aforesaid tolerance threshold.

To compare the electrical output of the pressure sensor **17** with the target pressure profile **P,** the electronic control unit **18** is programmed to sample the electrical output of the pressure sensor **17** at a given sampling frequency, *e.g*., every second, and compare the samples of the electrical output of the pressure sensor **17** with corresponding stored values of the target pressure profile **P.**

After each adjustment intervention of the proportional air solenoid valve **16,** the electronic control unit **18** is programmed to wait for a pressure transition interval before checking whether a further adjustment intervention of the proportional air solenoid valve **16** is to be performed.

Based on what has been described, the advantages that the present invention allows to obtain may be appreciated.

In particular, the present invention allows a pressure profile of the milk-air mixture downstream of the milk pump **6** to be to defined and set, which is reproduced throughout the dispensing of the beverage and that enables the milk module **1** to produce milk-based beverages that have a high quality both organoleptically and aesthetically, namely, that contain the correct amount of milk and that the top layer of milk foam has an appropriate height and consistency.

In addition, the present invention allows the absence of milk in the milk line **3** downstream of the milk pump **6** to be identified and signaled, thus indicating that the milk container **4** is empty.

In addition, the present invention allows any abnormalities in the milk module to be diagnosed and signaled, for example a failure of the milk pump.

Finally, it is clear that various modifications can be made to the embodiments described and shown without thereby departing from the scope of the present invention, as claimed in the appended claims.

For example, in a different embodiment not shown, air could be introduced into the air line **9** by a compressed air source, for example an air compressor, electronically controlled by the electronic control unit **18.** In this embodiment, the proportional air solenoid valve **16** could be omitted and the amount of air introduced into the milk line **9** could be adjusted by means of the appropriate control of the compressed air source, in the example considered the speed of the air compressor. Alternatively, the proportional air solenoid valve **16** could be maintained and arranged downstream of the compressed air source to finely adjust the amount of air introduced into the milk line **3.**

A heater could be arranged along the air line **9** to appropriately heat the air introduced into the milk line **3.**

## Claims

1. A milk module **(1)** for preparing hot or cold, frothed or non-frothed milk-based beverages from liquid milk;
the milk module **(1)** comprises a milk line **(3)** extending from a milk container **(4)** up to a milk dispensing nozzle **(5);** and an air line **(9)** extending from an air source and opens into the milk line **(3);**
the milk line **(3)** comprises a milk pump **(6)** to suck the milk from the milk container **(4),** a flow restriction **(7)** arranged on a delivery side of the milk pump **(6),** and a milk heater **(8);**
the milk module **(1)** further comprises a proportional air solenoid valve **(16)** arranged along the air line **(9);** a pressure sensor **(17)** to measure and output an output indicative of a pressure of the milk-air mixture in the milk line **(3)** downstream of the milk pump **(6);** and an electronic control unit **(18)** in communication with the pressure sensor **(17)** to receive the output thereof and with the proportional air solenoid valve **(16)** to control operation thereof;
in order to control operation of the proportional air solenoid valve **(16),** the electronic control unit **(18)** is configured to:
- store data representative of at least one target pressure profile **(P)** indicative of a time development of a target pressure of the milk-air mixture that is desired to be obtained in the milk line **(3),** downstream of the milk pump **(6);** and
- closed-loop control the proportional air solenoid valve **(16)** based on the pressure of the milk-air mixture measured by the pressure sensor **(17)** and the target pressure profile **(P).**

2. The milk module **(1)** of claim **1,** wherein the pressure sensor **(17)** is a physical sensor arranged along the milk line **(3),** on the delivery side of the milk pump **(6).**

3. The milk module **(1)** of claim **1,** wherein the pressure sensor **(17)** is a virtual sensor designed to measure and output an output indicative of the pressure of the milk-air mixture in the milk line **(3)** downstream of the milk pump **(6)** based on an electric current absorbed by the milk pump **(6).**

4. The milk module **(1)** of any one of the preceding claims, wherein the stored target pressure profile **(P)** is such as to cause the proportional air solenoid valve **(16)** to be controlled to cause the pressure of the milk-air mixture in the milk line **(3),** downstream of the milk pump **(6),** to have a substantially constant development over time.

5. The milk module **(1)** of any one of claims **1** to **3,** wherein the stored target pressure profile **(P)** is such as to cause the proportional air solenoid valve **(16)** to be controlled to cause the pressure of the milk-air mixture in the milk line **(3),** downstream of the milk pump **(6),** to have a variable development over time.

6. The milk module **(1)** of any one of the preceding claims, wherein the electronic control unit **(18)** is further configured to store different target pressure profiles **(P),** each of which is associated with a respective milk-based beverage that may be produced by the milk module **(1).**

7. The milk module **(1)** of any one of the preceding claims, wherein the electronic control unit **(18)** is further configured to control the proportional air solenoid valve **(16)** by implementing a Proportional-Derivative (PD) controller.

8. An automatic beverage preparation machine comprising the milk module **(1)** of any one of the preceding claims.

## Patentansprüche

1. Milchmodul (1) zum Zubereiten heißer oder kalter geschäumter oder nicht geschäumter milchbasierter Getränke aus flüssiger Milch; wobei
das Milchmodul (1) eine Milchleitung (3), die sich von einem Milchbehälter (4) bis zu einer Milchabgabedüse (5) erstreckt, und eine Luftleitung (9), die sich von einer Luftquelle erstreckt und in die Milchleitung (3) mündet, umfasst;
die Milchleitung (3) eine Milchpumpe (6), um die Milch aus dem Milchbehälter (4) zu saugen, einen Durchflussbegrenzer (7), die auf einer Abgabeseite der Milchpumpe (6) angeordnet ist, und eine Milchheizvorrichtung (8) umfasst und
das Milchmodul (1) ferner ein Luft-Proportional-Elektromagnetventil (16), das entlang der Luftleitung (9) angeordnet ist; einen Drucksensor (17) zum Messen und Ausgeben einer Ausgabe, die einen Druck des Milch/Luft-Gemischs in der Milchleitung (3) stromabwärts der Milchpumpe (6) angibt, und eine elektronische Steuereinheit (18) in Kommunikation mit dem Drucksensor (17) zum Empfangen dessen Ausgabe und mit dem Luft-Proportional-Elektromagnetventil (16) zum Steuern dessen Betriebs umfasst; wobei
die elektronische Steuereinheit (18) zum Steuern des Betriebs des Luft-Proportional-Elektromagnetventils (16) konfiguriert ist zum:
- Speichern von Daten, die für mindestens ein Zieldruckprofil (P) repräsentativ sind, das eine Zeitentwicklung eines Zieldrucks des Milch/Luft-Gemischs, dessen Erreichen in der Milchleitung (3) gewünscht ist, stromabwärts der Milchpumpe (6) angibt; und
- Regeln in einem geschlossenen Regelkreis des Luft-Proportional-Elektromagnetventils (16) auf der Grundlage des durch den Drucksensor (17) gemessenen Drucks des Milch/Luft-Gemischs und des Zieldruckprofils (P).

2. Milchmodul (1) nach Anspruch 1, wobei der Drucksensor (17) ein physischer Sensor ist, der entlang der Milchleitung (3) angeordnet ist, auf der Abgabeseite der Milchpumpe (6).

3. Milchmodul (1) nach Anspruch 1, wobei der Drucksensor (17) ein virtueller Sensor ist, der ausgelegt ist zum Messen und Ausgeben einer Ausgabe, die den Druck des Milch/Luft-Gemischs in der Milchleitung (3) stromabwärts der Milchpumpe (6) angibt, auf der Grundlage eines elektrischen Stroms, der durch die Milchpumpe (6) aufgenommen wird.

4. Milchmodul (1) nach einem der vorhergehenden Ansprüche, wobei das gespeicherte Zieldruckprofil (P) ausgelegt ist, zu verursachen, dass das Luft-Proportional-Elektromagnetventil (16) gesteuert wird, zu verursachen, dass der Druck des Milch/Luft-Gemischs in der Milchleitung (3) stromabwärts der Milchpumpe (6) eine im Wesentlichen konstante Entwicklung über die Zeit aufweist.

5. Milchmodul (1) nach einem der Ansprüche 1 bis 3, wobei das gespeicherte Zieldruckprofil (P) ausgelegt ist zu verursachen, dass das Luft-Proportional-Elektromagnetventil (16) gesteuert wird zu verursachen, dass der Druck des Milch/Luft-Gemischs in der Milchleitung (3), stromabwärts der Milchpumpe (6), eine veränderliche Entwicklung über die Zeit aufweist.

6. Milchmodul (1) nach einem der vorhergehenden Ansprüche, wobei die elektronische Steuereinheit (18) ferner konfiguriert ist, verschiedene Zieldruckprofile (P) zu speichern, von denen jedes einem entsprechenden milchbasierten Getränk zugeordnet ist, das durch das Milchmodul (1) hergestellt werden kann.

7. Milchmodul (1) nach einem der vorhergehenden Ansprüche, wobei die elektronische Steuereinheit (18) ferner konfiguriert ist, das Luft-Proportional-Elektromagnetventil (16) durch Implementieren eines Proportional-Differenzial-Reglers (PD) zu steuern.

8. Automatische Getränkezubereitungsmaschine, umfassend das Milchmodul (1) nach einem der vorhergehenden Ansprüche.

## Revendications

1. Module de lait (1) pour préparer des boissons à base de lait chaudes ou froides, moussées ou non moussées à partir de lait liquide ;
le module de lait (1) comprend une conduite de lait (3) s'étendant depuis un récipient de lait (4) jusqu'à une buse de distribution de lait (5) ; et une conduite d'air (9) s'étendant depuis une source d'air et s'ouvrant dans la conduite de lait (3) ;
la conduite de lait (3) comprend une pompe à lait (6) pour aspirer le lait à partir du récipient de lait (4), une restriction d'écoulement (7) agencée sur un côté distribution de la pompe à lait (6), et un dispositif de chauffage de lait (8) ;
le module de lait (1) comprend en outre une électrovanne proportionnelle à air (16) agencée le long de la conduite d'air (9) ; un capteur de pression (17) pour mesurer et délivrer une sortie indiquant la pression du mélange lait-air dans la conduite de lait (3) en aval de la pompe à lait (6) ; et une unité de commande électronique (18) en communication avec le capteur de pression (17) pour recevoir la sortie de celui-ci et avec l'électrovanne proportionnelle à air (16) pour commander le fonctionnement de celle-ci ;
afin de commander le fonctionnement du électrovanne proportionnelle à air (16), l'unité de commande électronique (18) est configurée pour :
- stocker des données représentatives d'au moins un profil de pression cible (P) indiquant une évolution dans le temps de la pression cible du mélange lait-air que l'on souhaite obtenir dans la conduite de lait (3) en aval de la pompe à lait (6) ; et
- commander en boucle fermée l'électrovanne proportionnelle à air (16) sur la base de la pression du mélange lait-air mesurée par le capteur de pression (17) et le profil de pression cible (P).

2. Module de lait (1) selon la revendication 1, dans lequel le capteur de pression (17) est un capteur physique agencé le long de la conduite de lait (3), sur le côté distribution de la pompe à lait (6).

3. Module de lait (1) selon la revendication 1, dans lequel le capteur de pression (17) est un capteur virtuel conçu pour mesurer et délivrer une sortie indiquant la pression du mélange lait-air dans la conduite de lait (3) en aval de la pompe à lait (6) sur la base d'un courant électrique absorbé par la pompe à lait (6).

4. Module de lait (1) selon l'une des revendications précédentes, dans lequel le profil de pression cible (P) stocké est de nature à provoquer la commande de l'électrovanne proportionnelle à air (16) pour faire en sorte que la pression du mélange lait-air dans la conduite de lait (3) en aval de la pompe à lait (6) ait une évolution sensiblement constante dans le temps.

5. Module de lait (1) selon l'une des revendications 1 à 3, dans lequel le profil de pression cible (P) stocké est de nature à provoquer la commande de l'électrovanne proportionnelle à air (16) pour faire en sorte que la pression du mélange lait-air dans la conduite de lait (3) en aval de la pompe à lait (6) ait une évolution variable dans le temps.

6. Module de lait (1) selon l'une des revendications précédentes, dans lequel l'unité de commande électronique (18) est en outre configurée pour stocker des profils de pression cibles (P) différents, chacun d'entre eux étant associé à une boisson à base de lait respective qui peut être produite par le module de lait (1).

7. Module de lait (1) selon l'une des revendications précédentes, dans lequel l'unité de commande électronique (18) est en outre configurée pour commander l'électrovanne proportionnelle à air (16) en mettant en œuvre un dispositif de commande proportionnel-dérivé (PD).

8. Machine automatique de préparation de boissons comprenant le module de lait (1) selon l'une des revendications précédentes.
